# EUROPÄISCHE PATENTSCHRIFT

(11) **EP 1 114 002 B1**
(45) Veröffentlichungstag und Bekanntmachung des Hinweises auf die Patenterteilung: **18.12.2002**
(21) Anmeldenummer: 99968660.3
(22) Anmeldetag: 03.09.1999
(51) Int. Cl.: C03C 17/25, C03C 17/02

(54) **VERFAHREN ZUR HERSTELLUNG OPTISCHER SCHICHTEN VON GLEICHMÄSSIGER SCHICHTDICKE**
METHOD FOR THE PRODUCTION OF OPTICAL LAYERS HAVING UNIFORM LAYER THICKNESS
PROCEDE DE PRODUCTION DE COUCHES OPTIQUES D'UNE EPAISSEUR REGULIERE

(30) Priorität: 06.09.1998 DE 19840525
(43) Veröffentlichungstag der Anmeldung: 11.07.2001
(73) Patentinhaber: Institut Für Neue Materialien gem. GmbH, 66123 Saarbrücken (DE)
(72) Erfinder: FINK-STRAUBE, Claudia, D-66125 Saarbrücken (DE); KALLEDER, Axel, D-66440 Saarbrücken (DE); KOCH, Thomas, D-54338 Schweich (DE); MENNIG, Martin, D-66287 Quierschied (DE); SCHMIDT, Helmut, D-66130 Saarbrücken-Güdingen (DE)
(74) Vertreter: Barz, Peter, Dr.
(86) Internationale Anmeldenummer: EP9906513
(87) Internationale Veröffentlichungsnummer: WO00014023

(56) Entgegenhaltungen:
- EP-A- 0 482 821
- EP-A- 0 775 669
- EP-A- 0 798 272
- EP-A- 0 926 103
- WO-A-93/24424

## Beschreibung

Die Erfindung betrifft ein Verfahren zur Herstellung optischer Schichten von gleichmäßiger Schichtdicke, insbesondere ein Verfahren zur Herstellung von Schichten von hoher optischer Qualität auf transparenten Formkörpern, beispielsweise auf Flachglas oder auf aktiven oder passiven optischen Bauteilen.

Wegen der hohen Anforderung an die Gleichmäßigkeit optischer Schichten werden diese fast ausschließlich über Gasphasenabscheidungen (PVC/CVD) oder über Tauchprozesse hergestellt. Bei den Tauchprozessen können sehr gleichmäßige Schichten erzielt werden, weil man bei erschütterungsfreiem Tauchen mit einer gleichmäßigen Ziehgeschwindigkeit die Schichtdicke gemäß den Formeln von Landau und Lewitsch und den Untersuchungen von James und Strawbridge aus den Parametern der Beschichtungslösung und der Ziehgeschwindigkeit sehr exakt berechnen kann. Erfolgt das Herausziehen im staubfreien Umfeld und bei sehr gleichmäßiger Ziehgeschwindigkeit, so werden hervorragende Schichten erhalten. Zur Erzielung eines geeigneten optischen Ergebnisses ist es erforderlich, daß solche Schichten eine Präzision im Bereich weniger nm erzielen. Ähnlich günstige Ergebnisse, wenngleich auf kleineren Flächen, werden durch sogenannte Schleuderbeschichtungsprozesse erreicht, bei denen ein rotierendes Substrat mit der Beschichtungslösung beschichtet wird und sich diese Lösung dann infolge der Fliehkraft gleichmäßig auf die Oberfläche verteilt.

Die Schichtdicken, die zur Erzielung optischer Wirkungen erforderlich sind, liegen in der Regel unterhalb der Wellenlänge des verwendeten Lichtes (z. B. λ/4-Schichten), da hier durch Interferenzen, insbesondere bei Mehrlagenschichten mit unterschiedlichen Brechwerten, entsprechende optische Effekte (Reflexion, Antireflexion, Interferenz) erzielt werden können.

Nachteil der oben genannten Verfahren ist es, daß die Schleuderbeschichtung auf sehr kleine Substrate beschränkt ist und daß die Tauchbeschichtung technologisch relativ aufwendig ist. Für Beschichtungsprozesse mit optischer Wirkung wurden in der Vergangenheit viele Untersuchungen zum sogenannten Sol-Gel-Prozeß durchgeführt. Dabei handelt es sich in der Regel um kolloidale Suspensionen von anorganischen Partikeln im nm-Bereich, die in entsprechenden Lösemitteln (z. B. Wasser oder Alkohole) suspendiert sind und bei der Tauchbeschichtung einen nanoskaligen partikulären Film auf der Oberfläche bilden. Im Falle des SiO₂ kann es sich auch um andere Strukturen, die eher polymerartig sind, handeln. Diese Filme werden dann durch einen thermischen Prozeß zu Oxidschichten verdichtet und bilden in der Regel sehr widerstandsfähige gleichmäßige Filme auf der Glasoberfläche. Infolge ihrer Gefügedimension im nm-Bereich weisen diese Schichten praktisch keine Lichtstreuung auf und sind deshalb transparent. Ein technologisches Problem bei solchen Prozessen besteht darin, daß die Sole nur eine begrenzte Lebensdauer haben, daß sie feuchtigkeitsempfindlich sind, daß sie in der Regel mit Säuren stabilisiert werden müssen und besonders bei großflächigen Anwendungen eine sehr kleine Ausbeute (Verhältnis von eingesetzter Solmenge zu auf der Oberfläche abgeschiedene Schicht) ermöglichen. In der Regel liegt diese unterhalb von 10 %, so daß neben hohen Kosten auch Umweltprobleme bei der Entsorgung der Sole auftreten.

Bisherige Untersuchungen über andere Beschichtungsverfahren haben gezeigt, daß es damit nicht möglich ist, ausreichend gleichmäßige Schichten zu erhalten, da infolge der geringen Dicke solcher Schichten ein Ausgleich von unterschiedlichen Schichtdicken durch Fließen innerhalb des Filmes nicht möglich ist. So ist es z. B. nicht denkbar, daß auf einer Fläche von mehreren m² ein Schichtausgleichsprozeß innerhalb einer endlichen Zeit stattfinden kann.

Vor diesem Hintergrund war es Aufgabe der Erfindung, ein Verfahren zur Herstellung optischer Schichten bereitzustellen, bei dem man über große Flächen die Gleichmäßigkeit der Schichtdicke so einstellen kann, daß über die oben genannten Fließprozesse nur noch geringe Materialtransporte auf der Substratoberfläche erforderlich sind, so daß im Endeffekt sehr gleichmäßige Schichtdicken erzielt werden.

In EP-A-775 669 wird die Beschichtung von Substraten mit Sol-Gel-Materialien beschrieben, um Aerogel-Beschichtungen zu erhalten. Als ein erstes Beschichtungslösungsmittel wird ein Polyol eingesetzt.

Die erfindungsgemäße Aufgabe.wird dadurch gelöst, daß man eine nach dem Sol-Gel-Verfahren hergestellte, ein hochsiedendes Lösungsmittel enthaltende Beschichtungszusammensetzung (im folgenden: Sol-Gel-Lack) mit einer handelsüblichen Flachsprühanlage auf ein Substrat aufsprüht und anschließend wärmebehandelt. Dieses Ergebnis ist insofern überraschend, als weder aus der Literatur noch aus der technischen Praxis Hinweise bekannt waren, die darauf hindeuten, daß über einen Sprühprozeß Sol-Gel-Werkstoffe in optischer Qualität und in Schichtdicken deutlich unterhalb von 1 µm auftragbar sind.

Das Besprühen des Substrats in der Flachsprühanlage soll unter Bedingungen erfolgen, die eine möglichst hohe Gleichmäßigkeit der Schichtdicke gewährleisten. Es wurde gefunden, daß dieses Ziel erreicht werden kann, wenn man beim Aufsprühen des Sol-Gel-Lacks die Naßfilmdicke so einstellt, daß sie mindestens um den Faktor 8 (acht) größer ist als die angestrebte Trockenfilmdicke, d.h. die Schichtdicke nach Entfernen des oder der Lösungsmittel durch Trocknen.

In diesem Zusammenhang liegt die Naßfilmdicke vorzugsweise im Bereich von 800 nm bis 100 µm, während die Trockenfilmdicke vorzugsweise 100 nm bis 10 µm beträgt.

Weitere Gesichtspunkte für eine möglichst gleichmäßige Beschichtung des Substrates mit dem Sol-Gel-Lack sind die Einstellungsparameter der Flachsprühanlage wie Düsentyp, Düsendruck und Düsenbewegung und vor allem ein möglichst großer Abstand der Sprühdüsen (z.B. 30 cm oder mehr) von der Substratoberfläche. Dies bewirkt, daß durch die von den Düsen erzeugten Luftbewegungen (z. B. Verwirbelungen) ein Ausgleich der Massenstromdichte derart erfolgt, daß beim Auftreffen der Spraytröpfchen auf die Substratoberfläche die geforderte hohe Gleichmäßigkeit erreicht wird. In einer besonderen Ausführungsform des erfindungsgemäßen Verfahrens können spezielle Sprühpistolen, z.B. solche mit HVLP (high volume low pressure) - Option eingesetzt werden.

Es wurde gefunden, daß z. B. bei einer lateralen Substrat-Transportgeschwindigkeit von 0,47 m·min⁻¹ bis 1,67 m·min⁻¹ und entsprechenden technischen Parametern (Schichtauftrag: < 5 g·m⁻² bei Feststoffgehalten < 15 % Massenanteil) Schichtdicken von 100 nm bis zu mehreren Mikrometern (z.B. 5 µm) erzielt werden können, die eine Schwankungsbreite von < ± 5 % aufweisen. Diese Werte sind ausreichend, um z. B. erfindungsgemäß beschichtetes Flachglas für Verscheibungen einsetzen zu können.

Ein anderer wichtiger Gesichtspunkt ist die bei der Durchführung von technischen Prozessen notwendige Entlüftung solcher Anlagen, die aus Gründen des Arbeitsplatz- und Umweltschutzes erforderlich ist. Um eine Gesundheitsgefährdung durch die verwendeten Lösungsmittel und ein Austreten von Lösungsmittel-Tröpfchen in die Atmosphäre zu verhindern, können solche Sprühanlagen nur mit wirksamen Abluftanlagen betrieben werden. Die dadurch bedingte Frischluftzufuhr im Zusammenspiel mit der extrem kleinen Tröpfchengröße der Sprühanlagen bewirkt jedoch einen raschen Entzug von Lösungsmitteln aus den Tröpfchen, so daß sie, wiederum bedingt durch die Notwendigkeit des gleichmäßigen Massenstromes zwischen Sprühdüsen und Substrat und des hohen Abstandes der Düsen vom Substrat, bei Verwendung üblicher Sole (Nanopartikel-Suspensionen in Wasser oder organischen Lösungsmitteln wie z.B. einwertigen Alkoholen) beim Auftreffen auf die Oberfläche schon als Feststoffteilchen ankommen und dadurch nicht mehr in der Lage sind, den notwendigen Schichtdicken-Ausgleich an der Oberfläche herbeizuführen.

Dieses Problem wird erfindungsgemäß dadurch gelöst, daß man den Solen zusätzlich zu den beim Sol-Gel-Prozeß eingesetzten oder entstehenden Lösungsmitteln hochsiedende Lösungsmittel beimengt, die unter den Beschichtungsbedingungen und bei Umgebungstemperaturen noch nicht zu einer Austrocknung der Tröpfchen führen. Unter hochsiedenden Lösungsmitteln werden hierbei Lösungsmittel mit einem Siedepunkt über 120°C, vorzugsweise über 150°C verstanden. Bevorzugte Beispiele für geeignete hochsiedende organische Lösungsmittel sind Glycole und Glycolether, wie z.B. Ethylen-, Propylen- oder Butylenglycol und die entsprechenden Di-, Tri-, Tetra-, Penta- oder Hexamere, sowie die entsprechenden Mono- oder Diether, wobei eine oder beide Hydroxylgruppen durch z.B. eine Methoxy-, Ethoxy-, Propoxy- oder Butoxygruppe ersetzt sein können; Terpene, z.B. Terpineol; und Polyole, z.B. 2-Methyl-2,4-pentandiol. Spezielle hochsiedende Lösungsmittel sind Polyethylenglycole und deren Ether, wie Diethylenglycol, Triethylenglycol und Tetraethylenglycol, Diethylenglycoldiethylether, Tetraethylenglycoldimethylether oder Diethylenglycolmonobutylether. Hiervon sind Diethylenglycol, Tetraethylenglycol und Diethylenglycolmonobutylether besonders bevorzugt. Selbstverständlich können auch Mischungen aus zwei oder mehreren dieser Lösungsmittel eingesetzt werden.

Vorzugsweise macht das hochsiedende Lösungsmittel 1 bis 50 Vol.-%, besonders bevorzugt 10 bis 40 Vol.-% der flüssigen Phase des erfindungsgemäß verwendeten Sol-Gel-Lacks aus.

Als Festkomponenten des Sol-Gel-Lackes können dem Sol-Gel-Prozeß zugängliche anorganische oder organisch-modifizierte, anorganische Komponenten, vorzugsweise oxidische oder organisch-modifizierte, oxidische Komponenten, eingesetzt werden. Beispiele für derartige Sol-Gel-Systeme sind in den WO 95/13249, WO 95/28663 und DE 19714949 beschrieben, auf die vollinhaltlich Bezug genommen wird.

Anorganische Lackkomponenten sind z.B. Oxidkomponenten von Glas oder Keramik bildenden Elementen wie SiO₂, TiO₂, ZrO₂, PbO, B₂O₃, Al₂O₃, P₂O₅, Alkali- und Erdalkalimetalloxide sowie Cer-, Molybdän-, Wolfram- und Vanadiumoxide. Zu deren Herstellung werden die genannten Elemente gewöhnlich in Form von Verbindungen wie Alkoxiden, Komplexen oder löslichen Salzen eingesetzt. Die Sol-Gel-Reaktion wird bei diesen Systemen in Lösungsmitteln wie Wasser, Alkoholen, Carbonsäuren oder deren Gemischen gegebenenfalls unter Zusatz eines Kondensationskatalysators (z.B. einer Säure oder Base) durchgeführt.

Einer besondere Ausführungsform für einsetzbare organisch-modifizierte, anorganische Komponenten sind die in der DE 19746885 beschriebenen Sole, bei denen die Solpartikel polymerisierbare oder polykondensierbare Oberflächengruppen (z.B. Epoxy- oder (Meth)acrylgruppen) aufweisen.

Zusätzlich zu den genannten anorganischen oder organisch-modifizierten, anorganischen Komponenten kann der Sol-Gel-Lack weitere Komponenten enthalten, beispielsweise vorgefertige Nanopartikel wie sie z.B. in der WO 93/06508 beschrieben sind. Diese Nanopartikel können z.B. in Form von Pulvern oder Solen zugegeben werden. Weitere geeignete Additive sind z.B. Farbstoffe, Pigmente oder Pigment-Vorstufen und Tenside. Falls die organisch-modifizierten Komponenten polymerisierbare oder polykondensierbare Gruppen enthalten, können auch entsprechende Katalysatoren/Initiatoren für die thermische und/oder photochemische Härtung zugesetzt werden.

Der Feststoffgehalt des Sol-Gel-Lackes liegt gewöhnlich unter 15 % Massenanteil. Im Einzelfall können aber auch höhere Massenanteile angewandt werden. Ein bevorzugter Bereich liegt bei 1 bis 15 %, insbesondere 5 bis 10 %.

Geeignete Substratmaterialien für das erfindungsgemäße Verfahren sind z.B. Glas, Keramik, Kunststoffe, Metalle (z.B. Edelstahl oder Aluminium) und Papier, wobei transparente Substrate bevorzugt sind.

Die Wärmebehandlung des mit dem Sol-Gel-Lack besprühten Substrats umfaßt zumindest eine Trocknung (Abtrennung des Lösungsmittels), kann aber auch eine thermische (z.B. mit IR-Strahlung) und/oder photochemische (z.B. mit UV-Strahlung) Härtung oder eine thermische Verdichtung (Sinterung) der Schicht einschließen. Es ist auch möglich, bei Anwendung entsprechend hoher Wärmebehandlungstemperaturen organisch-modifizierte Schichten durch Ausbrennen der Organik in anorganische, glasartige Schichten zu überführen.

Vor der Wärmebehandlung oder nach der Trocknung kann der auf das Substrat applizierte Lack gegebenenfalls z.B. durch Prägeprozesse, Photolithographie, Holographie, Elektronenstrahl-Lithographie oder Direct Laser Writing mikrostrukturiert werden.

Erfindungsgemäß ist es auch möglich, mehrere Schichten nacheinander auf das Substrat aufzubringen.

Das erfindungsgemäße Verfahren eignet sich zur Herstellung von dekorativen oder funktionellen Sol-Gel-Coatings, insbesondere von photochromen Systemen, elektrochromen Systemen, Farbschichten, Reflexions- oder Antireflexschichten oder Multilayers, die im Architekturbereich (z.B. als Fassadenelemente), im Automobilbereich (z.B. als Verscheibung), bei der Spiegelherstellung, bei der Herstellung von optischen Bauteilen, im Innenarchitekturbereich (z.B. Fliesen, Kacheln, Verglasung), für Möbel und Einrichtungsgegenstände, für Displays, für Schutzbeschichtungen aller Art Verwendung finden.

Die folgenden Beispiele erläutern die Erfindung, ohne sie zu beschränken. Es werden folgende Abkürzungen verwendet:
- DIAMO:: 3-(2-Aminoethylamino)propyltrimethoxysilan
- GPTS:: 3-Glycidyloxypropyltrimethoxysilan
- TEOS:: Tetraethoxysilan

### BEISPIEL 1: Herstellung von goldkolloidhaltigen PbO-SiO₂-Schichten

1,88 g H[AuCl₄]-3H₂O werden in 30 ml Ethanol und 1,16 g DIAMO gelöst. Zu dieser Lösung werden 50 ml vorhydrolysiertes GPTS / TEOS-Basissol (beschrieben im Herstellungsbeispiel der WO 95/13249) gegeben. Diese Mischung wird zu einer zweiten Lösung bestehend aus 4,25 g Pb(ac)₂, 30 ml Methanol und 2,91 g DIAMO getropft und 10 Minuten gerührt.

Das erhaltene goldkolloidhaltige Sol wird mit einem Lösungsmittelgemisch bestehend aus 120 ml Ethanol, 120 ml i-Propanol, 120 ml n-Butanol, 24 ml Butylglycol und 24 ml Tetraethylenglycol verdünnt. Mit diesem verdünnten Sol werden Floatglasscheiben der Größe 35 x 35 cm mit einer Flachsprühanlage der Fa. Venjakob beschichtet. Dabei werden die Zerstäuberkappen der 2 Normalpistolen (Fa. Devilbiss), die senkrecht zum Glassubstrat an einer Achse befestigt sind, um 90° versetzt, um einen Kreuzgang zu erzielen. Der Abstand zwischen zu beschichtendem Substrat und Sprühkopf beträgt 30 cm. Der Materialvordruck wurde auf 0,7 bar und der Zerstäuberdruck auf 4,2 bar eingestellt. Die Bandgeschwindigkeit kann zwischen 0,47 und 1,67 Metern pro Minute variiert werden. Die Schichten werden 15 Minuten bei 150°C getrocknet, mit 150 K/h auf 450°C aufgeheizt und für 30 Minuten bei 450°C verdichtet.

### BEISPIEL 2: Herstellung von goldkolloidhaltigen SiO₂-Schichten

Die Synthese des Goldsols erfolgt gemäß Beispiel 8 der WO 95/13249. Das erhaltene Sol wird im Verhältnis 1:3 mit gleichen Anteilen aus Ethanol, i-Propanol und n-Butanol verdünnt und es werden jeweils 5 Vol-% Butylglycol und 5 Vol-% Tetraethylenglycol zugegeben. Die Sprühparameter für die Flachsprühanlage und die Verdichtungsbedingungen entsprechen denen von Beispiel 1.

### BEISPIEL 3: Herstellung von elektrochromen WO₃-Schichten

Die Herstellung der elektrochromen Wolframoxidschicht erfolgt aus einer alkoholischen Peroxowolframsäure-Lösung (WO 95/28663), die durch Umsetzung von Wolframmetall mit Wasserstoffperoxid (30%ige wäßrige Lösung) hergestellt wird, indem die Peroxid-lösung, Ethanol und Essigsäure vorgelegt werden und das Metall zugegeben wird. Die Reaktionstemperatur wird durch ein thermostatisiertes Bad bei 0°C gehalten. Nach der Umsetzung wird die Lösung 90 Minuten auf 80°C erwärmt. Die klare Lösung wird unter reduziertem Druck (50 bis 300 mbar) fast zur Trockene eingeengt. Durch Auflösen in Ethanol wird eine Lösung mit 20 Gew.-% Peroxosäure hergestellt, die nach Zugabe von Lithiumhydroxid in einer Konzentration von 0,10 Mol Lithium pro Mol Wolfram weiter mit 0,57 ml n-Butanol pro ml Lösung verdünnt wird. Als letztes wird 0,06 ml Tetraethylenglycol pro ml Gesamtlösung zugegeben.

Die Sprühbeschichtung des Substrats (35 x 35 cm FTO-coated glass, engl: *Fluorinedoped tin oxide*) erfolgt mittels einer Flachsprühanlage der Fa. Venjakob, ausgestattet mit Spritzautomaten der Fa. Krautzberger (Typ A-14, HVLP, Zweistoffdüsen, Düsensatz 0,5). Ansonsten wird wie in Beispiel 1 verfahren. Das beschichtete Substrat wird 60 Minuten bei 240°C thermisch nachbehandelt.

### BEISPIEL 4: Na-Silicat-Sol + Kolloide

1,88 g H[AuCl₄].3H₂O werden in 30 ml Ethanol und 1,16 g DIAMO gelöst. Zu dieser Lösung werden 50 ml eines Natriumsilicatsols gegeben, das gemäß Beispiel 2 der DE 19714949 hergestellt wurde.

Die Weiterverarbeitung, die Applikation und die Verdichtung erfolgen gemäß Beispiel 1.

### BEISPIEL 5: SiO₂-Sol + Pigmente

Die Synthese des Basissols erfolgt gemäß Beispiel 1 der DE 19714949. In 50 ml dieses Sols werden 5 g eines Pigments (Iriodin 103, Fa. Merck) eingerührt.

Die Weiterverarbeitung, d.h. die Verdünnung dieses Sols, der Zusatz von Tetraethylenglycol und die Applikation erfolgen auf die in Beispiel 1 beschriebene Weise. Die Beschichtungen werden anschließend in einem Tunnelofen bei einer Zieltemperatur von 500°C verdichtet.

## Patentansprüche

1. Verfahren zur Herstellung optischer Schichten von gleichmäßiger Schichtdicke, **dadurch gekennzeichnet, daß** man eine nach dem Sol-Gel-Verfahren hergestellte, ein hochsiedendes Lösungsmittel enthaltende Beschichtungszusammensetzung auf Basis anorganischer oder organisch-modifizierter, anorganischer Komponenten mit einer Flachsprühanlage auf ein Substrat aufsprüht und anschließend wärmebehandelt, wobei man die Naßfilmdicke beim Aufsprühen der Beschichtungszusammensetzung auf das Substrat so einstellt, daß sie mindestens um den Faktor 8 (acht) größer ist als die angestrebte Trockenfilmdicke.

2. Verfahren nach Anspruch 1, **dadurch gekennzeichnet, daß** man eine Naßfilmdicke im Bereich von 800 nm bis 100 µm einstellt.

3. Verfahren nach Anspruch 1 oder 2, **dadurch gekennzeichnet, daß** man eine Trockenfilmdicke im Bereich von 100 nm bis 10 µm einstellt.

4. Verfahren nach einem der Ansprüche 1 bis 3, **dadurch gekennzeichnet, daß** man ein hochsiedendes Lösungsmittel, ausgewählt aus Glycolen, Glycolethern, Polyglycolen, Polyglycolethem, Polyolen, Terpenen und Mischungen aus zwei oder mehreren davon, verwendet.

5. Verfahren nach einem der Ansprüche 1 bis 4, **dadurch gekennzeichnet, daß** das hochsiedende Lösungsmittel 1 bis 50 Vol.-% der flüssigen Phase der Beschichtungszusammensetzung ausmacht.

6. Verfahren nach einem der Ansprüche 1 bis 5, **dadurch gekennzeichnet, daß** die Festkomponente der Beschichtungszusammensetzung eine anorganische oder organisch-modifizierte, anorganische Oxidkomponente ist.

7. Verfahren nach Anspruch 6, **dadurch gekennzeichnet, daß** die Oxidkomponente ausgewählt ist aus SiO₂, TiO₂, ZrO₂, PbO, B₂O₃, Al₂O₃, P₂O₅, Alkalimetall-, Erdalkalimetall, Cer-, Molybdän-, Wolfram- und Vanadiumoxid.

8. Verfahren nach Anspruch 6 oder 7, **dadurch gekennzeichnet, daß** die organisch-modifizierte Oxidkomponente ausgewählt ist aus nanoskaligen Oxidpartikeln, die polymerisierbare oder polykondensierbare Oberflächengruppen aufweisen.

9. Verfahren nach einem der Ansprüche 1 bis 8, **dadurch gekennzeichnet, daß** die Beschichtungszusammensetzung zusätzliche Komponenten, ausgewählt aus Nanopartikeln, Härtungskatalysatoren, Farbstoffen, Pigmenten, Pigment-Vorstufen und Tensiden, umfaßt.

10. Verfahren nach einem der Ansprüche 1 bis 9, **dadurch gekennzeichnet, daß** die Wärmebehandlung ein Trocknen sowie gegebenenfalls ein Härten und/oder Verdichten (Sintern) und/oder Ausbrennen der Schicht umfaßt.

11. Verfahren nach einem der Ansprüche 1 bis 10, **dadurch gekennzeichnet, daß** die auf das Substrat applizierte Schicht vor der Wärmebehandlung oder nach der Trocknung durch Prägeprozesse, Photolithographie, Holographie, Elektronenstrahl-Lithographie oder Direct Laser Writing mikrostrukturiert wird.

12. Verfahren nach einem der Ansprüche 1 bis 11, **dadurch gekennzeichnet, daß** mehrere Schichten nacheinander auf das Substrat aufgebracht werden.

## Claims

1. Method of producing optical layers of uniform thickness, **characterized in that** a coating composition prepared by the sol-gel process and comprising a high-boiling solvent, and based on inorganic or organically modified inorganic components, is sprayed onto a substrate using a flat spraying unit and is subsequently heat-treated, whereby the wet film thickness during spraying of the coating composition onto the substrate is adjusted such that it is greater by a factor of at least 8 (eight) than the target dry film thickness.

2. Method according to Claim 1, **characterized in that** a wet film thickness in the range from 800 nm to 100 µm is set.

3. Method according to Claim 1 or 2, **characterized in that** a dry film thickness in the range from 100 nm to 10 µm is set.

4. Method according to any of Claims 1 to 3, **characterized in that** a high-boiling solvent selected from glycols, glycol ethers, polyglycols, polyglycol ethers, polyols, terpenes and mixtures of two or more thereof is used.

5. Method according to any of Claims 1 to 4, **characterized in that** the high-boiling solvent accounts for from 1 to 50% by volume of the liquid phase of the coating composition.

6. Method according to any of Claims 1 to 5, **characterized in that** the solid component of the coating composition is an inorganic or organically modified inorganic oxide component.

7. Method according to Claim 6, **characterized in that** the oxide component is selected from SiO₂, TiO₂, ZrO₂, PbO, B₂O₃, Al₂O₃, P₂O₅, alkali metal oxide, alkaline earth metal oxide, cerium oxide, molybdenum oxide, tungsten oxide and vanadium oxide.

8. Method according to Claim 6 or 7, **characterized in that** the organically modified oxide component is selected from nanoscale oxide particles which have addition-polymerizable or polycondensable surface groups.

9. Method according to any of Claims 1 to 8, **characterized in that** the coating composition comprises additional components selected from nanoparticles, curing catalysts, dyes, pigments, pigment precursors and surfactants.

10. Method according to any of Claims 1 to 9, **characterized in that** the heat treatment comprises a drying and, if desired, a curing and/or densification (sintering) and/or burning-out of the layer.

11. Method according to any of Claims 1 to 10, **characterized in that**, prior to the heat treatment or after the drying, the layer applied to the substrate is microstructured by means of embossing processes, photolithography, holography, electron beam lithography or direct laser writing.

12. Method according to any of Claims 1 to 11, **characterized in that** two or more layers are applied in succession to the substrate.

## Revendications

1. Procédé pour la production de couches optiques d'épaisseur uniforme, **caractérisé en ce qu'**on pulvérise sur un support, au moyen d'une unité de pulvérisation à plat, une composition de revêtement à base de composants minéraux ou minéraux modifiés par des composés organiques, préparée par le procédé sol-gel, contenant un solvant à haut point d'ébullition, et on la traite ensuite par la chaleur, en réglant l'épaisseur de feuil humide, lors de la pulvérisation de la composition de revêtement sur le support, de manière qu'elle soit supérieure au moins par le facteur 8 (huit) à l'épaisseur de feuil sec recherchée.

2. Procédé selon la revendication 1, **caractérisé en ce qu'**on règle une épaisseur de feuil humide dans la plage de 800 nm à 100 µm.

3. Procédé selon la revendication 1 ou 2, **caractérisé en ce qu'**on règle une épaisseur de feuil sec dans la plage de 100 nm à 10 µm.

4. Procédé selon l'une quelconque des revendications 1 à 3, **caractérisé en ce qu'**on utilise un solvant à haut point d'ébullition, choisi parmi des glycols, des éthers de glycols, des polyglycols, des polyglycoléthers, des polyols, des terpènes et des mélanges de deux ou plus de deux de ceux-ci.

5. Procédé selon l'une quelconque des revendications 1 à 4, **caractérisé en ce que** le solvant à haut point d'ébullition constitue de 1 à 50 % en volume de la phase liquide de la composition de revêtement.

6. Procédé selon l'une quelconque des revendications 1 à 5, **caractérisé en ce que** le composant solide de la composition de revêtement est un composant de type oxyde minéral ou minéral modifié par un composé organique.

7. Procédé selon la revendication 6, **caractérisé en ce que** le composant de type oxyde est choisi parmi SiO₂, TiO₂, ZrO₂, PbO, B₂O₃, Al₂O₃, P₂O₅, un oxyde de métal alcalin, un oxyde de métal alcalino-terreux, l'oxyde de cérium, l'oxyde de molybdène, l'oxyde de tungstène et l'oxyde de vanadium.

8. Procédé selon la revendication 6 ou 7, **caractérisé en ce que** le composant de type oxyde minéral modifié par un composé organique est choisi parmi des nanoparticules d'oxydes qui comportent des groupes superficiels polymérisables ou polycondensables.

9. Procédé selon l'une quelconque des revendications 1 à 5, **caractérisé en ce que** la composition de revêtement comprend des composants supplémentaires choisis parmi des nanoparticules, des catalyseurs de durcissement, des colorants, des pigments, des précurseurs de pigments et des tensioactifs.

10. Procédé selon l'une quelconque des revendications 1 à 9, **caractérisé en ce que** le traitement thermique comprend un séchage ainsi qu'éventuellement un durcissement et/ou un compactage (frittage) et/ou un séchage complet de la couche au four.

11. Procédé selon l'une quelconque des revendications 1 à 10, **caractérisé en ce que** la couche appliquée sur le support est microtexturée avant le traitement thermique ou après le séchage, par des processus d'estampage, photolithographie, holographie, lithographie par faisceau d'électrons ou gravure au laser.

12. Procédé selon l'une quelconque des revendications 1 à 11, **caractérisé en ce que** plusieurs couches son appliquées successivement sur le support.
